# EUROPEAN PATENT SPECIFICATION

(11) **EP 3 343 832 B1**
(45) Date of publication and mention of the grant of the patent: **25.09.2019**
(21) Application number: 17207589.7
(22) Date of filing: 15.12.2017
(51) Int. Cl.: H04L 9/32

(54) **PHYSICAL UNCLONABLE FUNCTION CIRCUIT STRUCTURE**
PHYSIKALISCHE UNKLONBARE FUNKTIONSSCHALTUNGSSTRUKTUR
STRUCTURE DE CIRCUIT D'UNE FONCTION PHYSIQUE INCLONABLE

(30) Priority: 30.12.2016 CN 201611255571
(43) Date of publication of application: 04.07.2018
(73) Proprietor: Tongxin Microelectronics Co., Ltd., 100083 Haidian District Beijing (CN)
(72) Inventor: SU, Linlin, Haidian District, Beijing 100083 (CN); SHENG, Jinggang, Haidian District, Beijing 100083 (CN); CHEN, Gang, Haidian District, Beijing 100083 (CN); DING, Yimin, Haidian District, Beijing 100083 (CN); YUE, Chao, Haidian District, Beijing 100083 (CN); HOU, Yan, Haidian District, Beijing 100083 (CN); XU, Qiulin, Haidian District, Beijing 100083 (CN)
(74) Representative: Gill Jennings & Every LLP

(56) References cited:
- US-A1- 2016 247 769
- US-A1- 2016 330 038
- KUMAR RAGHAVAN ET AL: "On Manufacturing Aware Physical Design to Improve the Uniqueness of Silicon-Based Physically Unclonable Functions", 2014 27TH INTERNATIONAL CONFERENCE ON VLSI DESIGN AND 2014 13TH INTERNATIONAL CONFERENCE ON EMBEDDED SYSTEMS, IEEE, 5 January 2014 (2014-01-05), pages 381-386, XP032563221, ISSN: 1063-9667, DOI: 10.1109/VLSID.2014.72 [retrieved on 2014-02-05]

## Description

### FIELD

The present invention relates to the field of information security, and in particular to the structure of physical unclonable function (PUF) circuit.

### BACKGROUND

Physical unclonable function (PUF) is a function that inputs an incentive for a physical entity, and outputs an unpredictable response using a random difference of its inevitable internal physical construction. The PUF is widely applied to the field of hardware security.

There are two types of digital PUF circuit structures in the conventional technique. One type of PUF is a PUF based on an arbiter, which achieves a PUF function by different propagation delays of digital signal between different chips. A mainly problem of this type of PUF is circuit instability. When the circuit operates in different temperatures, and/or in different voltage environments, the transmission of the digital signal will be affected, resulting in the inconsistent output of the PUF data. The other type of PUF is a PUF based on Static Random Access Memory (SRAM), which achieves uniqueness by utilizing randomness of the RAM data when the chip is powered on. However, the error rate of SRAM-based PUF data is relatively high, which usually requires a large scale error correction code (ECC) circuit(s) to ensure correctness of the SRAM-based PUF data. For example, in order to achieve the error rate of 6.85x10⁻⁷, resulting the PUF circuit of generating 2048 bits secret keys, you need to deal with at least 7.75k bytes of ECC. In other words, to produce 2048 bits secret key data, you need to take up SRAM storage space of 7.75k bytes.

US 2016/330038 A1 discloses an apparatus for generating digital values to provide a random digital value. The apparatus generates the digital value based on a semiconductor process variation. The apparatus includes a generating unit to generate a plurality of digital values, based on the semiconductor process variation, and a processing unit to process the digital values and to provide a first digital value. The generating unit includes a plurality of physically unclonable functions (PUFs). A parameter is differently applied to the PUFS, and the PUFs generates the digital values.

US 2016/247769 A1 discloses a design structure for an on-chip identification circuitry, which includes pairs of conductors formed within one or more metallization layers. The distance between the conductors in each pair is predetermined so that, given known across chip line variations, there is a random chance of a short. Different masks form first conductors (e.g., metal lines separated by varying distances and having different widths) and second conductors (e.g., metal vias separated by varying distances and having equal widths). The first and second conductors alternate across the chip. Due to different separation distances and widths of the first conductors, the different separation distances of the second conductors and, random mask alignment variations, each first conductor can short to up to two second conductors. The resulting pattern of shorts and opens is used as an on-chip identifier or private key.

### SUMMARY

In view of above, a physical unclonable function (PUF) circuit structure is provided by the present invention, to achieve stability of the circuit and avoid using a large scale of ECC circuit(s) to ensure the correctness of the PUF data.

In order to solve the above mentioned technical problem, the following technical solutions are used in the present invention.

The invention claimed is:
A physical unclonable function (PUF) circuit structure comprising: n passive conductor groups and n XOR units, the n passive conductor groups and the n XOR units being in an one-to-one correspondence relationship, where
each of said passive conductor groups comprises m passive conductors, each of said passive conductors comprises a first terminal and a second terminal, the first terminal of each of said passive conductors is connected to a power supply, and the second terminal is connected to an input terminal of the XOR unit,
the second terminals of the passive conductors within a same passive conductor group are connected to the input terminal of the corresponding XOR unit,
where when the passive conductor is in a connected state, the second terminal of the passive conductor outputs a high level signal, when the passive conductor is in a disconnected state, the second terminal of the passive conductor outputs a low level signal, and the signal outputted from the second terminal of the passive conductor is inputted to the corresponding XOR unit, where each of the n XOR units performs an XOR operation on the signals outputted by the passive conductors within the same passive conductor group to obtain an XOR operation result, and XOR operation results obtained by all the XOR units is PUF data, where both n and m are positive integers,
where widths of the passive conductors within the same passive conductor group are not exactly the same, and the width difference between the width of at least one passive conductor of the passive conductor group and the critical width of the same passive conductor group is less than or equal to a first threshold so that the said at least one passive conductor has connectivity uncertainty in a chip fabrication process,
   and/or
within the same said passive conductor group, said at least one passive conductor comprises at least a first passive conductor segment and a second passive conductor segment, a space exists between the said first passive conductor segment and the said second passive conductor segment, and a space difference between at least one said space and a critical space is less than or equal to a second threshold so that the said at least one passive conductor has connectivity uncertainty during the chip manufacturing process, where
   the said critical width is a minimum width that ensures that the passive conductor is able to be connected when the passive conductor is fabricated during the chip fabrication process, and
   the said critical space is a minimum space which ensures that the passive conductor is able to be connected when the passive conductor comprising a plurality of passive conductor segments spaced apart from each other is fabricated during the chip fabrication process.

Optionally, the range of the width of the said passive conductor in the same passive conductor group covers the critical width corresponding to multiple process conditions of fabricating a chip.

Optionally, at least two of the said passive conductors have the same width in the same passive conductor group.

Optionally, the range of the space between the said first passive conductor segment and the said second passive conductor segment in the same passive conductor group covers the critical space corresponding to multiple process conditions of fabricating a chip.

Optionally, at least two of the said passive conductors have same spaces between the said first passive conductor segment and the said second passive conductor segment within the same passive conductor group.

Optionally, the circuit structure further comprises: an ECC circuit, where an input terminal of the said ECC circuit is connected with an output terminal of each said XOR unit, the output terminal of the said ECC circuit outputs PUF data, the length of the said PUF data is q bits, where q is a positive integer, and the value of q is related to the value of n and the structure of the ECC circuit.

Optionally, the said passive conductor comprises: one of a metal wire, a silicided polysilicon, a non-silicide polysilicon, an n-type diffusion source, a p-type diffusion source, a n-well or a p-well.

As compared with the prior art, the invention has the following beneficial effects.

The physical unclonable function (PUF) circuit structure provided by the invention is based on the principle of connectivity uncertainty in the process of fabricating the passive conductors for which each passive conductor has a width in close of the critical value, and/or the space between two adjacent passive conductors is in close of the critical value. Based on the principle, in the physical unclonable function (PUF) circuit structure provided by the present invention,, the widths of the passive conductors in the same passive conductor group are not exactly the same, and/or, the spaces between the passive conductor segments of the passive conductors in the same passive conductor group are not exactly the same, and the randomness of connectivity in the passive conductors is realized by the difference of the width and/or the space, thereby achieving the PUF function.

Moreover, since the connection and disconnection of the passive conductors can be stabilized after the fabrication is completed, and the physical unclonable function (PUF) circuit structure provided by the present invention is not affected by the working environment of the chip and does not require a large scale ECC circuit(s) as a post-processing circuit(s). Therefore, for the further more relatively stable performance, it is not necessary of the need for a large scale ECC circuit(s) to ensure the correctness of the PUF data, and it is just optional to have the need of the simple ECC circuit(s) to ensure the correctness of the PUF data.

### BRIEF DESCRIPTION OF THE DRAWINGS

In order to understand the specific embodiments of the present invention clearly, a brief description of the drawings used in the specific embodiments of the present invention will be described below.
Figure 1 is a schematic diagram of a physical unclonable function (PUF) circuit structure provided by the first embodiment of the present invention.
Figure 2 is a schematic diagram of a physical unclonable function (PUF) circuit structure provided by the second embodiment of the present invention.
Figure 3 is a specific structural diagram of an error correction code (ECC) circuit provided by the second embodiment of the present invention.
Figure 4 is a schematic structural diagram of a passive conductor group provided by the third embodiment of the present invention.

### DETAILED DESCRIPTION OF EMBODIMENTS

Hereinafter specific embodiments of the present invention are described in detail with reference to the accompanying drawings.

As described in the Background section, the physical unclonable function (PUF) is a function that outputs a unique, unpredictable response using a random difference of its unavoidable intrinsic physical construction. Thus, the physical unclonable function (PUF) circuit structure according to embodiments of the present application is based on the principle of connectivity uncertainty in the process of fabricating the passive conductors for which each passive conductor has a width in close of the critical value, and/or the space between two adjacent passive conductors is in close of the critical value.

Based on the above principles, the present invention provides the specific embodiment of the physical unclonable function (PUF) circuit structure. First, see the First Embodiment.

Specifically, the passive conductors with width and/or the space in close of the critical value may be connected or disconnected in the fabricating process. At this point, the connected state and the disconnected state of the passive conductors are random.

Based on the above principles, the present invention provides the specific embodiment of the physical unclonable function (PUF) circuit structure. Firstly, the First Embodiment is described.

### First Embodiment

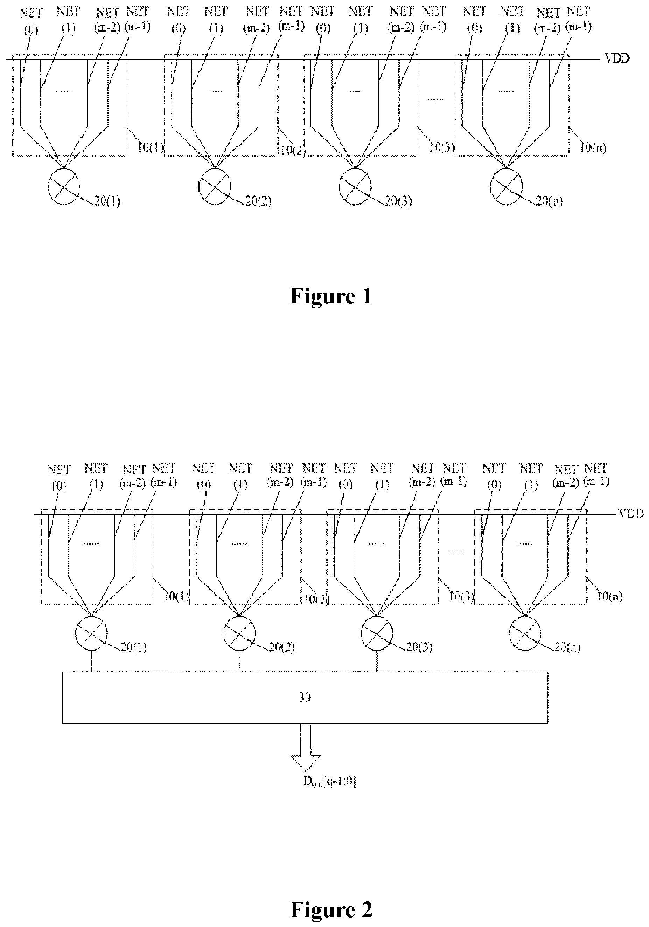

Figure 1 is a schematic diagram of a physical unclonable function (PUF) circuit structure according to a first embodiment of the present invention. As shown in Figure 1, the physical unclonable function (PUF) circuit structure may include:
n passive conductor groups 10(1) to 10(n) and n XOR units 20(1) to 20(n), where n is a positive integer.

Each of the n passive conductor groups 10 includes m passive conductors NET (0) to NET (m-1), where m is a positive integer; Each passive conductor NET includes a first terminal and a second terminal, wherein the first terminal of each passive conductor NET is connected to a power supply VDD, the second terminal of each passive conductor NET is connected to an input terminal of a XOR unit 20, wherein the passive conductors NET in the same passive conductor group 10 are connected to the input terminals of the same XOR unit 20. Thus, in the physical unclonable function (PUF) circuit structure provided by the present invention, a passive conductor group 10 corresponds to an XOR unit 20, so that the number of the XOR units corresponds to the number of the passive conductor group.

In the embodiments of the present invention, the passive conductor includes one of a metal wire, a silicided polysilicion, a non-silicide polysilicon, an n-type diffusion source, a p-type diffusion source, an n-well and a p-well.

Each of the said n XOR units 20(1) to 20(n) performs an XOR operation on signals inputted by the second terminal of the passive conductor to obtain a XOR operation result, the XOR operation result is PUF data, and the PUF data is outputted by an output terminal of the XOR unit. In the embodiment of the present invention, the total length of the said PUF data is n bits, where n and m are positive integers.

In the embodiment of the present invention, the widths of the m passive conductors NET in one passive conductor group 10 are not exactly the same. Specifically, in the same passive conductor group 10, the widths of the m passive conductors NET may be different from each other, and may be partially identical and partially different, wherein the width difference between the width and the critical width of a portion of the passive conductors NET within the same passive conductor group 10 is less than or equal to the first threshold so that the at least a portion of the passive conductor has a connectivity uncertainty in the chip fabrication process. Thus, in the physical unclonable function (PUF) circuit structure provided by the embodiment of the present invention, a portion of the passive conductors is in the connected state, while the other portion of the passive conductors is in the disconnected state.

In the first embodiment of the present application, the critical width is a minimum width that ensures that the passive conductor must be able to be connected when the passive conductor is fabricated in a chip fabrication process. The first threshold may be an empirical value based on a number of experimental results.

The physical unclonable function (PUF) circuit structure provided by the present invention achieves a physical unclonable function by using the connectivity uncertainty of the passive conductor whose width value is in close to the critical width.

It should be noted that the critical width varies with the chip fabrication process conditions, that is, the critical width is related to the chip fabrication process condition. In order to enable the physical unclonable function (PUF) circuit structure provided by the present invention to achieve the physical unclonable function in multiple different chip fabrication processes, in the physical unclubble function (PUF) circuit structure provided by the present invention, the width range of the passive conductors within the same passive conductor group covers the critical widths of the plurality of different chip fabrication processes.

In addition, the more the passive conductor with the same width, the greater the probability of getting the critical width, the easier the critical width is achieved, and the easier the connection randomness of the passive conductor is achieved. Therefore, in order to increase the probability of obtaining the critical width, at least two passive conductors NET have the same width value within the same passive conductor group 10.

The physical unclonable function (PUF) circuit structure provided by the embodiment of the present invention operates as follows.

The first terminals of all the passive conductors NET in the respective passive conductor groups 10(1) to 10(n) are connected to the power supply VDD. When the passive conductor NET is in a connected state, the second terminal of the passive conductor NET outputs a high level, the logic is "1"; and when the passive conductor is in a disconnected state, the second terminal of the passive conductor outputs a low level, the logic is "0". The second terminal of the passive conductor NET is connected to the input terminal of the corresponding XOR unit 20. Since the widths of the passive conductors NET in the same passive conductor group 10 are different, after the fabrication of the passive conductor group is completed under different chip fabrication process conditions, in the same passive conductor group 10, some passive conductors NET are in connected state, and some passive conductors NET are in disconnected state. Therefore, in the second terminal of the passive conductor NET, some outputs are high and some outputs are low, and the corresponding logic is "1" and "0" respectively.

Each XOR unit 20 performs an XOR operation on signals from m passive conductor NET in the corresponding passive conductor group 10 to obtain an XOR operation result, and the output terminal of the XOR unit 20 outputs the XOR operation result. XOR operation results of the n XOR units 20 is the PUF data, and the PUF data includes q bits. The XOR operation result outputted by the XOR unit 20 is directly related to the randomness of the connection of the passive conductors NET.

The above is the specific embodiment of the physical unclonable function (PUF) circuit structure provided by the first embodiment of the present invention. In the specific embodiment, the widths of the passive conductors in the same passive conductor group are not exactly the same, and the randomness of the connection of the passive conductor is realized by the different widths, and then the PUF function can be realized.

Moreover, due to the connection and disconnection of the passive conductor, the stable state can be achieved after the fabrication of the passive conductor is completed, and it is not affected by the working environment of the chip, and does not require a large number of ECC circuit(s) as the post-processing circuit(s). Therefore, for the further more relatively stable performance, it is not necessary of the need of a large scale of ECC circuit(s) to ensure the correctness of the PUF data for the physical unclonable function (PUF) circuit structure provided by the present invention, and it is just optional to have the need of the simple of ECC circuit(s) to ensure the correctness of the PUF data.

In addition, when application environment of the chip is more harsh, it may lead to a higher bit error rate of PUF data. In order to improve the quality of the PUF data and prevent errors of PUF data over time, the second embodiment is further provided by the present invention.

### Second Embodiment

It should be noted that, the physical unclonable function (PUF) circuit structure described in the second embodiment is obtained on the basis of the physical unclonable function (PUF) circuit structure described in the first embodiment. Therefore, the circuit structure provided by the second embodiment has many similarities with the circuit structure provided by the first embodiment. For briefness, the second embodiment of the present invention has more description of the differences in details, and the first embodiment of the present invention has the related description of the similarities.

Figure 2 is a schematic diagram of the physical unclonable function (PUF) circuit structure provided by the second embodiment of the present invention. As shown in Figure 2, in addition to the n passive conductor groups 10(1) to 10(n) and the n XOR units 20(1) to 20(n) shown in Figure 1, the circuit structure may further optionally comprises: an ECC circuit 30.

The input terminal of the ECC circuit 30 is connected to the output terminals of all the XOR units 20(1) to 20(n), so that the ECC circuit 30 processes the PUF data outputted by the XOR units 20(1) to 20(n), to obtain the valid PUF data.

It should be noted that, in the second embodiment of the present invention, the structures and connection relationship of the passive conductor groups 10(1) to 10(n) and the XOR units 20(1) to 20(n) are completely as the same as those of the passive conductor groups 10(1) to 10(n) and the XOR units 20(1) to 20(n) in the first embodiment of the present invention, which are not described in details herein, and for briefness, the first embodiment has the related description.

The ECC circuit 30 may be any type of ECC circuit. For the selection of the ECC circuits is different, the number of bits q of the PUF data generated by the physical unclonable function (PUF) circuit structure provided by the second embodiment of the present application is also different.

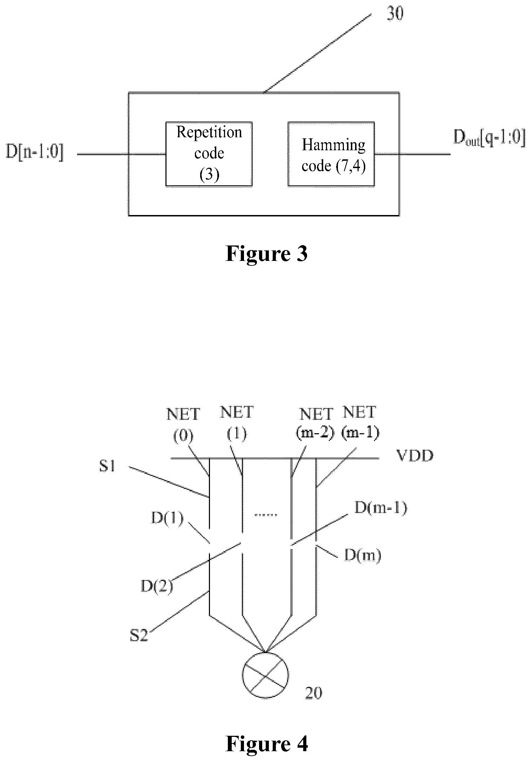

It should be noted that, in the second embodiment of the present invention, m is only related to the chip fabrication process, and q is the length of the PUF data finally required, where q is a positive integer and n>=q. When the unclonable function (PUF) circuit structure comprises the ECC circuit, q is related to the value of n and the structure of the ECC circuit, and n, q need to satisfy the relative relationship of the algorithm selected by the ECC circuit. For example, as shown in Figure 3, if the ECC circuit 30 uses the repetition code repeat (3) and the Hamming code ham (7, 4), m=40 and q=1024, then n=1024^{∗}3^{∗}7/4=5376. Each passive conductor group comprises 40 passive conductors with different widths, there is the total of 5376 passive conductor groups, and finally the total of 1024 bits of PUF data is generated.

The above is the description of the specific embodiment of the physical unclonable function (PUF) circuit structure provided by the second embodiment of the present invention. In the specific embodiment, in addition to achieving the beneficial effects described in the first embodiment, the quality of the PUF data can be improved, and the errors of PUF data can be prevented over time.

It should be noted that, in the first embodiment and the second embodiment described above, the connection uncertainty of the passive conductor is achieved by the magnitude of the width value of the passive conductor. In another embodiment of the present invention, each of the passive conductors may be divided into multiple segments of the passive conductor, and the connection uncertainty of the passive conductor is achieved by utilizing the space between the segments of the passive conductor. The third embodiment is further provided by the present invention.

### Third Embodiment

It should be noted that a physical unclonable function (PUF) circuit structure provided by the third embodiment has many similarities with those of description in the first embodiment. For briefness, the third embodiment of the present invention has more description of the differences in details, and the first embodiment of the present invention has the related description of the similarities.

It should be noted that, in the third embodiment of the present invention, the structures and connection relationship of the passive conductor groups 10(1) to 10(n) and the XOR units 20(1) to 20(n) are completely as the same as those of the passive conductor groups 10(1) to 10(n) and the XOR units 20(1) to 20(n) in the first embodiment of the present invention, which are not described in details herein, and for briefness, the first embodiment has the related description.

The physical unclonable circuit function (PUF) structure provided by the third embodiment differs from those of the first embodiment in that: as shown in Figure 4 (Figure 4 shows a schematic diagram of the connection relationship of one passive conductor group and one XOR unit), each of the passive conductor NET in the passive conductor group comprises at least a first passive conductor segment S1 and a second passive conductor segment S2 spaced from each other, there is a certain space D between the first passive conductor segment S1 and the second passive conductor segment S2, and the spaces D(1) to D(m) between the first passive conductor segments S1 and the second passive conductor segments S2 of the respective passive conductor NET are not exactly the same. As an optional embodiment of the present invention, each of the passive conductors NET comprises two spaced segments of the first passive conductor segment S1 and the second passive conductor segment S2.

It should be noted that, in the third embodiment of the present invention, the space value between the first passive conductor segments S1 and the second passive conductor segments S2 differs from the critical space, and its difference is less than or equal to the second threshold, for a portion of the passive conductors in the same passive conductor group, such that the at least a portion of the passive conductors have connection uncertainty in the chip fabrication process. That is, in the physical unclonable function (PUF) circuit structure provided by the third embodiment of the present invention, a portion of the passive conductors are in a connected state, and the other portion of the passive conductors are in a disconnected state.

In the third embodiment of the present invention, the said critical space is a minimum space that ensures that the passive conductor must be able to be connected as fabricating the passive conductor in the chip fabrication process, when one passive conductor comprises a plurality of the passive conductor segments spaced apart from each other. The second threshold may be an empirical value based on a number of experimental results.

The physical unclonable function (PUF) circuit structure provided by the third embodiment of the present invention achieves the physical unclonable function by using the connectivity uncertainty of the space between the first passive conductor segment S1 and the second passive conductor segment S2 when the space value is in close to the critical space.

It should be noted that, the critical space varies with the chip fabrication process conditions, that is, the critical space is related to the chip fabrication process conditions. In order to enable the physical unclonable function (PUF) circuit structure provided by the third embodiment of the present invention to achieve the physical unclonable function in multiple different chip fabrication processes, in the physical unclonable function (PUF) circuit structure provided by the present invention, the range of the space values of the first passive conductor segment and the second passive conductor segment within the same passive conductor group covers the critical spaces of the plurality of different chip fabrication processes.

In addition, the more the passive conductor with the same space, the greater the probability of getting the critical space, the easier the critical space is achieved, and the easier the connection randomness of the passive conductor is achieved. Therefore, in order to increase the probability of obtaining the critical space, at least two passive conductors in the same passive conductor group have the same space between the passive conductor segments.

The above is the specific embodiment of the physical unclonable function (PUF) circuit structure provided by the third embodiment of the present invention. In the specific embodiment, the spaces between the passive conductor segments of the passive conductors in the same passive conductor group are not exactly the same, and the connection randomness of the passive conductors is achieved by using the different widths and/or different spaces, and then the PUF function can be realized.

Moreover, due to the connection and disconnection of the passive conductor, the stable state can be achieved after the fabrication of the passive conductor is completed, and it is not affected by the working environment of the chip, and does not require a large scale of ECC circuit(s) as the post-processing circuit(s). Therefore, for the further more relatively stable performance, it is not necessary of the need of a large scale of ECC circuit(s) to ensure the correctness of the PUF data for the physical unclonable function (PUF) circuit structure provided by the present invention, and it is just optional to have the need of the simple of ECC circuit(s) to ensure the correctness of the PUF data.

In addition, as another embodiment of the present invention, as the description in the second embodiment, an ECC circuit may be optionally added to the structure of the physical unclonable function (PUF) circuit described in the third embodiment. It is similar between the circuit structure in the third embodiment and the circuit structure described in the second embodiment, and it will be readily apparent to those skilled in the art based on the circuit structure described in the second embodiment, and therefore will not be described in details herein.

In addition, as the extented embodiment of the embodiment of the present invention, the first embodiment and the third embodiment described above may be combined. That is, in the same passive conductor group, the widths of at least a portion of passive conductors may be different, and at least a portion of passive conductors may comprises a first passive conductor segment and a second passive conductor segment spaced from each other, and the spaces between the first passive conductor segments and the second passive conductor segments are different. In this way, in the combined embodiment, through the difference between the width of the passive conductor and the space between the passive conductor segments, the uncertainty of the connection and disconnection of the passive conductor is realized, so that the PUF function of the physical unclonable function (PUF) circuit structure can be realized.

## Claims

1. A physical unclonable function circuit structure, comprising n passive conductor groups (10(1), 10(2), 10(3),... 10(n)) and n XOR units (20(1), 20(2), 20(3),... 20(n)), the n passive conductor groups (10(1), 10(2), 10(3),... 10(n)) and the n XOR units (20(1), 20(2), 20(3),... 20(n)) being in an one-to-one correspondence relationship, wherein
each of said passive conductor groups (10(1), 10(2), 10(3),... 10(n)) comprises m passive conductors (NET(0), NET(1),... NET(m-2), NET(m-1)), each of said passive conductors (NET(0), NET(1),... NET(m-2), NET(m-1)) comprises a first terminal and a second terminal, the first terminal of each of said passive conductors (NET(0), NET(1),... NET(m-2), NET(m-1)) is connected to a power supply, and the second terminal is connected to an input terminal of the XOR unit (20(1), 20(2), 20(3),... 20(n)),
wherein the second terminal of the passive conductor (NET(0), NET(1),... NET(m-2), NET(m-1)) within a same passive conductor group (10(1), 10(2), 10(3),... 10(n)) is connected to the input terminal of the corresponding XOR unit (20(1), 20(2), 20(3),... 20(n)),
wherein when the passive conductor (NET(0), NET(1),... NET(m-2), NET(m-1)) is in a connected state, the second terminal of the passive conductor (NET(0), NET(1),... NET(m-2), NET(m-1)) outputs a high level signal, when the passive conductor (NET(0), NET(1),... NET(m-2), NET(m-1)) is in a disconnected state, the second terminal of the passive conductor (NET(0), NET(1),... NET(m-2), NET(m-1)) outputs a low level signal, and the signal outputted from the second terminal of the passive conductor (NET(0), NET(1),... NET(m-2), NET(m-1)) is inputted to the corresponding XOR unit,
wherein each of the n XOR units (20(1), 20(2), 20(3),... 20(n)) performs an XOR operation on the signals outputted by the passive conductors (NET(0), NET(1),... NET(m-2), NET(m-1)) within the same passive conductor group (10(1), 10(2), 10(3),... 10(n)) to obtain an XOR operation result, and XOR operation results obtained by all the XOR units (20(1), 20(2), 20(3),... 20(n)) is PUF data, wherein both n and m are positive integers, **characterized in that**
widths of the passive conductors (NET(0), NET(1),... NET(m-2), NET(m-1)) within the same passive conductor group are not exactly the same, and the width difference between the width of at least one passive conductor (NET(0), NET(1),... NET(m-2), NET(m-1)) of the passive conductor group (10(1), 10(2), 10(3),... 10(n)) and a critical width of the same passive conductor group (10(1), 10(2), 10(3),... 10(n)) is less than or equal to a first threshold so that the said at least one passive conductor (NET(0), NET(1),... NET(m-2), NET(m-1)) has connectivity uncertainty in a chip fabrication process,
or
within the same said passive conductor group (NET(0), NET(1),... NET(m-2), NET(m-1)), said at least one passive conductor (NET(0), NET(1),... NET(m-2), NET(m-1)) comprises at least a first passive conductor segment and a second passive conductor segment, a space (D(1), D(2),... D(m-2), D(m-1)) exists between the said first passive conductor segment and the said second passive conductor segment, and a space difference between at least one said space (D(1), D(2),... D(m-2), D(m-1)) and a critical space is less than or equal to a second threshold so that the said at least one passive conductor (NET(0), NET(1),... NET(m-2), NET(m-1)) has connectivity uncertainty during the chip manufacturing process, wherein
the said critical width is a minimum width that ensures that the passive conductor (NET(0), NET(1),... NET(m-2), NET(m-1)) is able to be connected when the passive conductor (NET(0), NET(1),... NET(m-2), NET(m-1)) is fabricated during the chip fabrication process, and
the said critical space is a minimum space which ensures that the passive conductor (NET(0), NET(1),... NET(m-2), NET(m-1)) is able to be connected when the passive conductor (NET(0), NET(1),... NET(m-2), NET(m-1)) comprising a plurality of passive conductor segments spaced apart from each other is fabricated during the chip fabrication process.

2. The circuit structure according to claim 1, wherein the range of the width of the said passive conductor (NET(0), NET(1),... NET(m-2), NET(m-1)) in the same passive conductor group (10(1), 10(2), 10(3),... 10(n)) covers the critical width corresponding to a plurality of process conditions of fabricating a chip.

3. The circuit structure according to claim 1 or claim 2, wherein at least two of the said passive conductors (NET(0), NET(1),... NET(m-2), NET(m-1)) have the same width in the same passive conductor group (10(1), 10(2), 10(3),... 10(n)).

4. The circuit structure according to claim 1, wherein the range of the space (D(1), D(2),... D(m-2), D(m-1)) between the said first passive conductor segment and the said second passive conductor segment in the same passive conductor group (10(1), 10(2), 10(3),... 10(n)) covers the critical space corresponding to a plurality of process conditions of fabricating a chip.

5. The circuit structure according to claim 1 or claim 4, wherein at least two of the said passive conductors (NET(0), NET(1),... NET(m-2), NET(m-1)) have same spaces (D(1), D(2),... D(m-2), D(m-1)) between the said first passive conductor segment and the said second passive conductor segment within the same passive conductor group (10(1), 10(2), 10(3),... 10(n)).

6. The circuit structure according to any one of claims 1 to 5, further comprises: an error correction code (ECC) circuit (30), wherein an input terminal of the said ECC circuit (30) is connected with an output terminal of each said XOR unit (20(1), 20(2), 20(3),... 20(n)), the output terminal of the said ECC circuit (30) outputs PUF data, the length of the said PUF data is q bits, wherein q is a positive integer, and the value of q is related to the value of n and the structure of the ECC circuit (30).

7. The circuit structure according to any one of claims 1 to 6, wherein the passive conductor (NET(0), NET(1),... NET(m-2), NET(m-1)) comprises one of a metal wire, a silicided polysilicon, a non-silicide polysilicon, an n-type diffusion source, a p-type diffusion source, an n-well and a p-well.

## Patentansprüche

1. Eine physische nicht klonbare Funktionsschaltungsstruktur, die n passive Leitergruppen (10(1), 10(2), 10(3), ..., 10(n)) und n XOR-Einheiten (20(1), 20(2), 20(3), ..., 20(n)) umfasst, wobei die n passiven Leitergruppen (10(1), 10(2), 10(3), ..., 10(n)) und die n XOR-Einheiten (20(1), 20(2), 20(3), ..., 20(n)) in einer Eins-zu-Eins-Korrespondenzbeziehung stehen, wobei jede der passiven Leitergruppen (10(1), 10(2), 10(3), ..., 10(n)) m passive Leiter (NET(0), NET(1), ..., NET(m-2), NET(m-1)) umfasst, wobei jeder der passiven Leiter (NET(0), NET(1), ..., NET(m-2), NET(m-1)) einen ersten Anschluss und einen zweiten Anschluss umfasst, wobei der erste Anschluss jedes passiven Leiters (NET(0), NET(1), ..., NET(m-2), NET(m-1)) mit einer Stromversorgung verbunden ist, und der zweite Anschluss mit einem Eingangsanschluss der XOR-Einheit (20(1), 20(2), 20(3), ..., 20 (n)) verbunden ist, wobei der zweite Anschluss des passiven Leiters (NET(0), NET(1), ..., NET(m-2), NET(m-1)) innerhalb derselben passiven Leitergruppe (10(1), 10(2), 10(3), ..., 10(n)) mit dem Eingangsanschluss der entsprechenden XOR-Einheit (20(1), 20(2), 20(3), ..., 20(n)) verbunden ist, wobei, wenn der passive Leiter (NET(0), NET(1), ..., NET(m-2), NET(m-1)) sich in einem verbundenen Zustand befindet, der zweite Anschluss des passiven Leiters (NET(0), NET(1), ..., NET(m-2), NET(m-1)) ein Signal mit hohem Pegel ausgibt, wenn der passive Leiter (NET(0), NET(1), ..., NET(m-2), NET(m-1)) sich in einem getrennten Zustand befindet, der zweite Anschluss des passiven Leiters (NET(0), NET(1), ..., NET(m-2), NET(m-1)) ein Signal mit niedrigem Pegel ausgibt, und das vom zweiten Anschluss des passiven Leiters (NET(0), NET(1), ..., NET(m-2), NET(m-1)) ausgegebene Signal in die entsprechende XOR-Einheit eingegeben wird, wobei jede der n XOR-Einheiten (20(1), 20(2), 20(3), ..., 20(n)) eine XOR-Operation an den Signalen ausführt, die von den passiven Leitern (NET(0), NET(1), ..., NET(m-2), NET(m-1)) innerhalb derselben passiven Leitergruppe (10(1), 10(2), 10(3), ..., 10(n)) ausgegeben werden, um ein XOR-Operationsergebnis zu erhalten, und XOR-Operationsergebnisse, die von allen XOR-Einheiten (20(1), 20(2), 20(3), ..., 20(n)) erhalten werden, PUF-Daten sind, wobei sowohl n als auch m positive ganze Zahlen sind, **dadurch gekennzeichnet, dass** die Breiten der passiven Leiter (NET(0), NET(1), ..., NET(m-2), NET(m-1)) innerhalb derselben passiven Leitergruppe nicht genau gleich sind, und der Breitenunterschied zwischen der Breite mindestens eines passiven Leiters (NET(0), NET(1), ..., NET(m-2), NET(m-1)) der passiven Leitergruppe (10(1), 10(2), 10(3), ..., 10(n)) und einer kritischen Breite derselben passiven Leitergruppe (10(1), 10(2), 10(3), ..., 10(n)) kleiner oder gleich eines ersten Schwellenwerts ist, so dass mindestens ein passiver Leiter (NET(0), NET(1), ..., NET(m-2), NET(m-1)) Konnektivitätsunsicherheit in einem Chipherstellungsprozess aufweist, oder innerhalb derselben passiven Leitergruppe (NET(0), NET(1), ..., NET(m-2), NET(m-1)) der mindestens eine passive Leiter (NET(0), NET(1), ..., NET(m-2), NET(m-1)) mindestens ein erstes passives Leitersegment und ein zweites passives Leitersegment umfasst, wobei ein Raum (D(1), D(2), ..., D(m-2), D(m-1)) zwischen dem ersten passiven Leitersegment und dem zweiten passiven Leitersegment besteht und eine Raumdifferenz zwischen mindestens einem Raum (D(1), D(2), ..., D(m-2), D(m-1)) und einem kritischen Raum kleiner oder gleich einem zweiten Schwellenwert ist, so dass mindestens ein passiver Leiter (NET(0), NET(1), ..., NET(m-2), NET(m-1)) während des Chipherstellungsprozesses eine Konnektivitätsunsicherheit aufweist, wobei die kritische Breite eine Mindestbreite ist, die sicherstellt, dass der passive Leiter (NET(0), NET(1), ..., NET(m-2), NET(m-1)) angeschlossen werden kann, wenn der passive Leiter (NET(0), NET(1), ..., NET(m-2), NET(m-1)) während des Chipherstellungsprozesses hergestellt wird, und der kritische Raum ein Mindestraum ist, der sicherstellt, dass der passive Leiter (NET(0), NET(1), ..., NET(m-2), NET(m-1)) angeschlossen werden kann, wenn der passive Leiter (NET(0), NET(1), ..., NET(m-2), NET(m-1)), der eine Vielzahl von passiven Leitersegmenten umfasst, die voneinander beabstandet sind, während des Chipherstellungsprozesses hergestellt wird.

2. Schaltungsstruktur nach Anspruch 1, wobei der Bereich der Breite des passiven Leiters (NET(0), NET(1), ..., NET(m-2), NET(m-1)) in derselben passiven Leitergruppe (10(1), 10(2), 10(3), ..., 10(n)) die kritische Breite abdeckt, die der Vielzahl von Prozessbedingungen zum Herstellen eines Chips entspricht.

3. Schaltungsstruktur nach Anspruch 1 oder 2, wobei mindestens zwei der genannten passiven Leiter (NET(0), NET(1), ..., NET(m-2), NET(m-1)) die gleiche Breite in der gleichen passiven Leitergruppe (10(1), 10(2), 10(3), ..., 10(n)) aufweisen.

4. Schaltungsstruktur nach Anspruch 1, wobei der Umfang des Raumes (D(1), D(2), ..., D(m-2), D(m-1)) zwischen dem ersten passiven Leitersegment und dem zweiten passiven Leitersegment in derselben passiven Leitergruppe (10(1), 10(2), 10(3), ..., 10(n)) den kritischen Raum abdeckt, der der Vielzahl von Prozessbedingungen zum Herstellen eines Chips entspricht.

5. Schaltungsstruktur nach Anspruch 1 oder 4, wobei mindestens zwei der genannten passiven Leiter (NET(0), NET(1), ..., NET(m-2), NET(m-1)) die gleichen Räume (D(1), D(2), ..., D(m-2), D(m-1)) zwischen dem ersten passiven Leitersegment und dem zweiten passiven Leitersegment innerhalb derselben passiven Leitergruppe (10(1), 10(2), 10(3), ..., 10(n)) aufweisen.

6. Schaltungsstruktur nach einem der Ansprüche 1 bis 5, ferner umfassend:
eine Fehlerkorrekturcode (ECC)-Schaltung (30), wobei ein Eingangsanschluss der ECC-Schaltung (30) mit einem Ausgangsanschluss jeder XOR-Einheit (20(1), 20(2), 20(3), ..., 20(n)) verbunden ist, der Ausgangsanschluss der ECC-Schaltung (30) PUF-Daten ausgibt, die Länge der PUF-Daten q Bits beträgt, wobei q eine positive ganze Zahl ist, und der Wert von q mit dem Wert von n und der Struktur der ECC-Schaltung (30) in Beziehung steht.

7. Schaltungsstruktur nach einem der Ansprüche 1 bis 6, wobei der passive Leiter (NET(0), NET(1), ..., NET(m-2), NET(m-1)) eines aus einem Metalldraht, einem silizidierten Polysilizium, einem silizidfreien Polysilizium, einer n-artigen Diffusionsquelle, einer p-artigen Diffusionsquelle, einer n-Wanne und/oder einer p-Wanne umfasst.

## Revendications

1. Structure de circuit à fonction physique non clonable, comprenant n groupes de conducteurs passifs (10(1), 10(2), 10(3),... 10(n)) et n unités XOR (20(1), 20(2), 20(3),... 20(n)), les n groupes de conducteurs passifs (10(1), 10(2), 10(3),... 10(n)) et les n unités XOR (20(1), 20(2), 20(3),... 20(n)) étant dans une relation de correspondance biunivoque, chacun desdits groupes de conducteurs passifs (10(1), 10(2), 10(3),... 10(n)) comprenant m conducteurs passifs (NET(0), NET(1),... NET(m-2), NET(m-1)), chacun desdits conducteurs passifs (NET(0), NET(1),... NET(m-2), NET(m-1)) comprend une première borne et une seconde borne, la première borne de chacun desdits conducteurs passifs (NET(0), NET(1),... NET(m-2), NET(m-1)) est connectée à une alimentation électrique, et la seconde borne est connectée à une borne d'entrée de l'unité XOR (20(1), 20(2), 20(3),... 20(n)), la seconde borne du conducteur passif (NET(0), NET(1),... NET(m-2), NET(m-1)) dans un même groupe de conducteurs passifs (10(1), 10(2), 10(3),... 10(n)) étant connectée à la borne d'entrée de l'unité XOR correspondante (20(1), 20(2), 20(3),... 20(n)), lorsque le conducteur passif (NET(0), NET(1),... NET(m-2), NET(m-1)) est dans un état connecté, la seconde borne du conducteur passif (NET(0), NET(1),... NET(m-2), NET(m-1)) délivrant un signal de haut niveau, lorsque le conducteur passif (NET(0), NET(1),... NET(m-2), NET(m-1)) est dans un état déconnecté, la seconde borne du conducteur passif (NET(0), NET(1),... NET(m-2), NET(m-1)) délivrant un signal de niveau bas, et le signal délivré par la seconde borne du conducteur passif (NET(0), NET(1),... NET(m-2), NET(m-1)) étant entré dans l'unité XOR correspondante, chacune des n unités XOR (20(1), 20(2), 20(3),... 20(n)) effectuant une opération XOR sur les signaux délivrés par les conducteurs passifs (NET(0), NET(1),... NET(m-2), NET(m-1)) dans le même groupe de conducteurs passifs (10(1), 10(2), 10(3),... 10(n)) de manière à obtenir un résultat d'opération XOR, et les résultats d'opération XOR obtenus par toutes les unités XOR (20(1), 20(2), 20(3),... 20(n)) étant des données PUF, où n et m sont des entiers positifs, **caractérisée en ce que** les largeurs des conducteurs passifs (NET(0), NET(1),... NET(m-2), NET(m-1)) dans le même groupe de conducteurs passifs ne sont pas exactement les mêmes, et la différence de largeur entre la largeur d'au moins un conducteur passif (NET(0), NET(1),... NET(m-2), NET(m-1)) du groupe de conducteurs passifs (10(1), 10(2), 10(3),... 10(n)) et une largeur critique du même groupe de conducteurs passifs (10(1), 10(2), 10(3),... 10(n)) est inférieur ou égal à un premier seuil de sorte que ledit au moins un conducteur passif (NET(0), NET(1),... NET(m-2), NET(m-1)) présente une incertitude de connectivité dans un processus de fabrication de puce, ou dans ledit même groupe de conducteurs passifs (NET(0), NET(1),... NET(m-2), NET(m-1)), ledit au moins un conducteur passif (NET(0), NET(1),... NET(m-2), NET(m-1)) comprend au moins un premier segment de conducteur passif et un second segment de conducteur passif, un espace (D(1), D(2),... D(m-2), D(m-1)) existe entre ledit premier segment de conducteur passif et ledit second segment de conducteur passif, et une différence d'espace entre au moins ledit espace (D(1), D(2),... D(m-2), D(m-1)) et un espace critique est inférieur ou égal à un second seuil de sorte que ledit au moins un conducteur passif (NET(0), NET(1),... NET(m-2), NET(m-1)) présente une incertitude de connectivité pendant le processus de fabrication de puce, ladite largeur critique étant une largeur minimale qui assure que le conducteur passif (NET(0), NET(1),... NET(m-2), NET(m-1)) peut être connecté lorsque le conducteur passif (NET(0), NET(1),... NET(m-2), NET(m-1)) est fabriqué pendant le processus de fabrication de puce, et ledit espace critique est un espace minimal qui assure que le conducteur passif (NET(0), NET(1),... NET(m-2), NET(m-1)) peut être connecté lorsque le conducteur passif (NET(0), NET(1),... NET(m-2), NET(m-1)) comprenant une pluralité de segments conducteurs passifs espacés les uns des autres est fabriqué pendant le processus de fabrication de puce.

2. Structure de circuit selon la revendication 1, dans laquelle la plage de la largeur dudit conducteur passif (NET(0), NET(1),... NET(m-2), NET(m-1)) dans le même groupe de conducteurs passifs (10(1), 10(2), 10(3),... 10(n)) couvre la largeur critique correspondant à une pluralité de conditions de processus de fabrication d'une puce.

3. Structure de circuit selon la revendication 1 ou la revendication 2, dans laquelle au moins deux desdits conducteurs passifs (NET(0), NET(1),... NET(m-2), NET(m-1)) possèdent la même largeur dans le même groupe de conducteurs passifs (10(1), 10(2), 10(3),... 10(n)).

4. Structure de circuit selon la revendication 1, dans laquelle la plage de l'espace (D(1), D(2),... D(m-2), D(m-1)) entre ledit premier segment de conducteur passif et ledit second segment de conducteur passif dans le même groupe de conducteurs passifs (10(1), 10(2), 10(3),... 10(n)) couvre l'espace critique correspondant à une pluralité de conditions de processus de fabrication d'une puce.

5. Structure de circuit selon la revendication 1 ou la revendication 4, dans laquelle au moins deux desdits conducteurs passifs (NET(0), NET(1),... NET(m-2), NET(m-1)) ont les mêmes espaces (D(1), D(2),... D(m-2), D(m-1)) entre ledit premier segment de conducteur passif et ledit second segment de conducteur passif au sein du même groupe de conducteurs passifs (10(1), 10(2), 10(3),... 10(n)).

6. Structure de circuit selon l'une quelconque des revendications 1 à 5, qui comprend en outre :
un circuit de code de correction d'erreur (ECC) (30), une borne d'entrée dudit circuit ECC (30) étant connectée à une borne de sortie de chaque dite unité XOR (20(1), 20(2), 20(3),... 20(n)), la borne de sortie dudit circuit ECC (30) délivrant des données PUF, la longueur desdites données PUF est q bits, où q est un entier positif, et la valeur de q est liée à la valeur de n et la structure du circuit ECC (30).

7. Structure de circuit selon l'une quelconque des revendications 1 à 6, dans laquelle le conducteur passif (NET(0), NET(1),... NET(m-2), NET(m-1)) comprend un parmi un fil métallique, un polysilicium à base de siliciure, un polysilicium non à base de siliciure, une source de diffusion de type n, une source de diffusion de type p, un puits n et un puits p.
